# EUROPÄISCHE PATENTANMELDUNG

(11) **EP 1 247 608 A1**
(43) Veröffentlichungstag der Anmeldung: **09.10.2002**
(21) Anmeldenummer: 02006258.4
(22) Anmeldetag: 20.03.2002
(51) Int. Cl.: B23K 1/20, B23K 33/00

(54) **Metallbauteil**

(30) Priorität: 03.04.2001 DE 20105751 U
(71) Anmelder: Benteler Automobiltechnik GmbH & Co. KG, 33104 Paderborn (DE)
(72) Erfinder: Lübbers, Rainer, Dr., 33098 Paderborn (DE); Mang, Rene, 34439 Willebadessen (DE)
(74) Vertreter: Ksoll, Peter, Dr.-Ing.

(57) **Zusammenfassung**

Ein erfindungsgemäßes Metallbauteil besteht aus wenigstens zwei Werkstücken 2, 3 vorzugsweise aus Aluminium oder einer Aluminiumlegierung, die unter Einhaltung eines Lötspalts S mittels Hartlöten verbunden sind. Der Lötspalt S wird durch einen Abstandshalter b definiert, der an einer dem Lötspalt S zugewandten Fügefläche 4, 5 aus dem Material des Werkstücks 2, 3 herausgearbeitet ist. In der Praxis können die Abstandshalter beispielsweise punkt-, buckel- oder linienförmig ausgebildet sein.

## Beschreibung

Die Erfindung betrifft ein Metallbauteil, bestehend aus wenigstens zwei metallischen Werkstücken, die unter Einhaltung eines Lötspalts mittels Hartlöten verbunden sind.

Unter Löten versteht man das Verbinden erwärmter, in festem Zustand verbleibender metallischer Werkstücke mit Hilfe eines geschmolzenen Zusatzmetalls, dem Lot. Die Schmelztemperatur des Lots liegt unter der Schmelztemperatur der zu verbindenden Werkstücke. Die Fügeflächen der Werkstücke werden vom Lot benetzt, ohne geschmolzen zu werden. Die Bindung ist abhängig von den Reaktionen zwischen Lot und Grundwerkstoff und von der Verarbeitungstemperatur. Das Lot dringt in das Gefüge des Grundwerksoffs, löst einen Teil davon und bildet eine Legierung. Diesen Vorgang der gegenseitigen Durchdringung nennt man Diffusion.

Man unterscheidet im wesentlichen zwischen Weichlöten und Hartlöten. Weichlöten wird bei einer Arbeitstemperatur unter 450 °C vorwiegend bei Stahl, Kupfer und Kupferlegierungen ausgeführt. Bei Löttemperaturen über 450 °C spricht man von Hartlöten. Erwärmt wird hierbei üblicherweise mit der Flamme, im Schutzgasofen oder mittels Stromdurchgang. Die vorliegende Erfindung bezieht sich auf mittels Hartlöten verbundene Werkstücke.

Das Hartlöten von Werkstücken wird in der industriellen Fertigung häufig eingesetzt, wenn spezielle Anforderungen der Halbzeuge (geringe Wanddicken, Beschichtung) oder der Bauteilgeometrie den Einsatz von Schweißverfahren nicht zulassen. Auch bei der Verbindung von zwei Werkstücken mit paralleler Kontaktfläche gibt es Vorteile, da im Gegensatz zum Schweißen die Verbindung auf der gesamten Kontaktfläche zwischen den Werkstücken besteht und nicht nur am Rand. Voraussetzung für eine gute Lötverbindung ist allerdings eine gleichmäßige Benetzung der Fügeflächen mit Lot. Neben der Wahl eines geeigneten Flussmittels und der richtigen Lotmenge ist hier entscheidend die Einstellung eines möglichst konstanten Lötspalts zwischen den zu verlötenden Bauteilen. Ohne diese letztgenannte Voraussetzung ist in vielen Fällen die für den Lötprozess wichtige Kapillarwirkung nicht gegeben und das geschmolzene Lot verteilt sich nicht gleichmäßig zwischen den Werkstücken über die Fügeflächen. Ist der Lötspalt zu klein, fällt die Festigkeit wegen zunehmender Bindefehler stark ab. Umgekehrt bring auch eine zu große Spaltbreite eine Abnahme der Festigkeit mit sich. Bei der gängigen Fixierung der Werkstücke, z.B. in einer Spannvorrichtung, kann ein gleichmäßiger Lötspalt, dessen Breite in der Regel zwischen 0,1 mm bis 0,2 mm liegt, nur mit größter Sorgfalt und hohem Aufwand eingestellt werden.

Der Erfindung liegt daher ausgehend vom Stand der Technik die Aufgabe zugrunde, ein aus zwei metallischen Werkstücken mittels Hartlöten gefügtes Metallbauteil zu schaffen, welches unter Einhaltung eines präzisen Lötspalts günstig mit gleichbleibender hoher Qualität zu fertigen ist und verbesserte Festigkeitseigenschaften aufweist.

Die Lösung dieser Aufgabe besteht in einem Metallbauteil gemäß den Merkmalen von Anspruch 1, bei dem der Lötspalt durch zumindest an einer Fügefläche eines Werkstücks vorgesehene Abstandshalter definiert ist.

Auch wenn die Abstandshalter grundsätzlich verschiedenartig gestaltet sein können, wird es im Rahmen der Erfindung als besonders vorteilhaft angesehen, die Abstandshalter aus dem Material eines Werkstücks herauszuarbeiten, wie dies in Anspruch 2 charakterisiert ist. Für die Einhaltung eines präzisen Lötspalts genügt es, nur an einem Werkstück Abstandshalter vorzusehen. Selbstverständlich ist auch die Ausbildung von Abstandshaltern an beiden Werkstücken denkbar.

Zur Sicherung eines prozesssicheren Hartlötverfahrens zur Verbindung von zwei metallischen Werkstücken werden erfindungsgemäß Abstandshalter vorgeschlagen, die aus einem der beiden Werkstücke herausgearbeitet sind und die Höhe bzw. Breite des gewünschten Lötspalts definieren. Die Abstandshalter können punkt- oder buckelförmig ausgebildet sein, wie dies Anspruch 3 vorsieht. In einer ebenfalls vorteilhaften Ausgestaltung sind die Abstandshalter linienförmig ausgebildet (Anspruch 4).

Nach Anspruch 5 liegt die Breite des Lötspalts üblicherweise zwischen 0,02 mm und 0,5 mm, wobei ein Lötspalt zwischen 0,05 mm und 0,2 mm als besonders vorteilhaft angesehen wird.

Für die Praxis verspricht ein Metallbauteil insbesondere gewichtsmäßig Vorteile wenn dieses aus Aluminium oder einer Aluminiumlegierung besteht (Anspruch 6).

Die Abstandshalter können an mehreren Stellen punkt- oder linienförmig über die Fügefläche bzw. die Kontaktfläche zwischen den beiden Werkstücken verteilt angeordnet sein. Durch ein Zusammendrücken der Werkstücke ergibt sich ein gleichmäßig breiter Spalt, ohne den Lotfluss zu behindern. Die beiden dicht mit definiert gleichbleibend breitem Lötspalt gegenüberliegenden Fügeflächen erzeugen eine Kapillarwirkung, die die Ausbreitung des Lots wesentlich verbessert. Hierdurch wird das Lot in den Lötspalt hinein gezogen. Es entsteht ein kapillarer Fülldruck, der das Lot auch gegen die Schwerkraft in den Lötspalt hochziehen kann.

Das neuerungsgemäße Metallbauteil zeichnet sich durch die vorteilhafte Fertigung aus und seine gleichbleibend hohe Qualität mit sehr guten Festigkeitseigenschaften. Dies ist insbesondere bei der Serienfertigung von Metallbauteilen in hohen Stückzahlen, wie beispielsweise in der Automobilindustrie, von Vorteil.

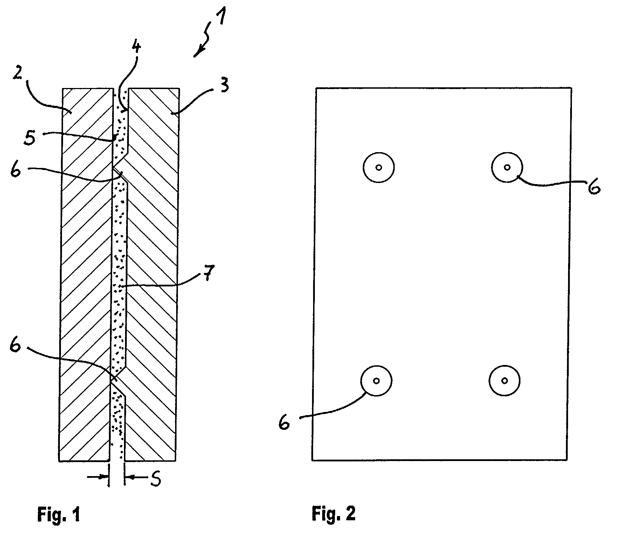

Die Erfindung ist nachfolgend anhand der schematischen Darstellungen der Figuren 1 und 2 näher beschrieben.

Figur 1 zeigt in technisch vereinfachter Ausführungsform einen Vertikalschnitt durch ein Metallbauteil, bestehend aus zwei metallischen Werkstücken.

Figur 2 zeigt die Ansicht auf die Fügefläche eines der beiden Werkstücke.

Das in der Figur 1 schematisch dargestellte Metallbauteil 1 besteht aus zwei Werkstücken 2, 3, die unter Einhaltung eines Lötspalts S mittels Hartlöten verbunden sind. Die Werkstücke 2, 3 können beispielsweise aus einer Aluminiumlegierung bestehen, deren Schmelztemperatur bei ca. 600 °C liegt.

Die beiden Werkstücke 2, 3 sind mit ihren Fügeflächen 4, 5 zueinander gerichtet. Der Lötspalt S bzw. dessen Breite ist durch an der Fügefläche 4 des Werkstücks 3 aus dem Material des Werkstücks 3 herausgearbeitete Abstandshalter 6 vorgegeben und so definiert. Wie man insbesondere auch anhand der Figur 2 erkennt, sind die Abstandshalter 6 buckelförmig in Form von Kegeln gleichmäßig auf der Fügefläche 4 des Werkstücks 3 verteilt angeordnet.

Die Abstandshalter 6 definieren einen konstanten Spalt S zwischen den beiden Werkstücken 2, 3, der auch beim Lötvorgang selbst bei hohen Temperaturen beibehalten wird. Die Breite des Spalts S liegt vorzugsweise zwischen 0,05 mm und 0,2 mm.

Die beiden Werkstücke 2, 3 werden aneinander gedrückt. Die Abstandshalter 6 gewährleisten den präzisen Spaltabstand. Die Werkstücke 2, 3 werden dann verlötet. Das Lot 7 ist in der Figur 1 durch eine Punktschraffur angedeutet. Durch den gleichbleibenden Abstand der sich gegenüberliegenden Fügeflächen 4, 5 wird eine Kapillarwirkung erzeugt, die die Ausbreitung des Lots 7 wesentlich verbessert. Dies begünstigt sowohl die Qualität der Lotverbindung als auch deren Festigkeit, wodurch ein Metallbauteil 1 mit hohen mechanischen Festigkeitseigenschaften und gutem statischem und dynamischem Belastungsverhalten beschaffen wird.

### Bezugszeichenaufstellung

- 1 -: Metallbauteil
- 2 -: Werkstück
- 3 -: Werkstück
- 4 -: Fügefläche
- 5 -: Fügefläche
- 6 -: Fügefläche
- 7 -: Lot

- S-: Lötspalt

## Patentansprüche

1. Metallbauteil, bestehend aus wenigstens zwei Werkstücken (2, 3), die unter Einhaltung eines Lötspalts (S) mittels Hartlöten verbunden sind, **dadurch gekennzeichnet, dass** der Lötspalt (S) durch einen an zumindest einer dem Lötspalt (S) zugewandten Fügefläche (4, 5) eines Werkstücks (2, 3) vorgesehenen Abstandshalter (6) definiert ist.

2. Metallbauteil nach Anspruch 1, **dadurch gekennzeichnet, dass** der oder die Abstandshalter (6) aus dem Material des Werkstücks (2, 3) herausgearbeitet sind.

3. Metallbauteil nach Anspruch 1 oder 2, **dadurch gekennzeichnet,dass** die Abstandshalter (6) punkt- oder buckelförmig ausgebildet sind.

4. Metallbauteil nach Anspruch 1 oder 2, **dadurch gekennzeichnet,dass** die Abstandshalter linienförmig ausgebildet sind.

5. Metallbauteil nach einem der Ansprüche 1 bis 4, **dadurch gekennzeichnet,dass** der Lötspalt (S) zwischen 0,02 mm und 0,5 mm, insbesondere zwischen 0,05 mm und 0,2 mm, breit ist.

6. Metallbauteil nach einem der Ansprüche 1 bis 5, **dadurch gekennzeichnet,dass** die Werkstücke (2, 3) aus Aluminium oder einer Aluminiumlegierung bestehen.
